# EUROPEAN PATENT APPLICATION

(11) **EP 0 704 159 A2**
(43) Date of publication of application: **03.04.1996**
(21) Application number: 95830384.4
(22) Date of filing: 20.09.1995
(51) Int. Cl.: A23B 4/023, A23B 4/20, A23B 4/26

(54) **Process for processing tuna-fish prior to its canning**

(30) Priority: 21.09.1994 IT MI941917
(71) Applicant: Rizzoli, Emilio, Parma (IT); Fava, Antonio, Parma (IT)
(72) Inventor: Fava, Antonio, Parma (IT)
(74) Representative: Pizzoli, Pasquale Vincenzo

(57) **Abstract**

The tuna-fish or other fish to be canned is mechanically subjected, prior to its cooking and after cutting, if any, to evisceration, skinning, boning, cleaning, salting and finally churning, whereafter the thus treated product is steamed and packed.

## Description

The present invention relates to a process for processing tuna-fish or other similar fish to be canned, and in particular to a process whose operative steps are carried out prior to the cooking of the fish.

It is known that tuna-fish or other similar fish to be canned are presently subjected to a series of preliminary operations which consist in unfreezing, cutting and steaming the fish, whereafter it is cooled, dried and then subjected to hand cleaning for the removal of skin, bones and other undesired parts. The thus treated fish is selected according to different degrees of quality and delivered to the canning lines.

It is also known that tuna-fish steaming has recently almost completely replaced pickle or boiling-water cooking, since both these two cooking methods have various drawbacks. In fact, in pickle cooking it is difficult to salt the product evenly, whereby it is necessary to cut it into small thickness slices with a large surface, besides the drawbacks caused by the treatment of drain water whose high sodium chloride content in some cases jeopardizes the working of the biological depuration plant. In the water cooking, still used by some factories, the fish undergoes an undesirable leaching of a certain amount of proteins, vitamins and mineral salts, resulting in lower compactness of the muscular tissue of the product and presence of water in the subsequent operations.

Though it has significant advantages with respect to the prior art, yet steaming too is not free from drawbacks. For example, one drawback is the loss occurring in the processing steps following the fish cooking. Another drawback stems from the fact that the skinning operation has to be necessarily carried out by hand, since it is performed on cooked tuna-fish which has a low mechanical strength. Moreover, the salting of the product requires a very long time for the even diffusion of the salt powder within the product, since it is performed when the latter has already been canned. This time is usually of about 15-20 days for small sizes and 20-30 days for the other sizes.

Therefore, the object of the present invention is to provide a process for fish processing which is free from the above-cited drawbacks. This object is achieved by means of a process wherein the unfrozen and cut product is subjected to the skinning, boning and cleaning operations, characterized in that said operations are carried out on the raw product, whereafter the product is salted by injecting therein a saline solution and finally subjected to a strong intermittent mechanical shaking.

The tuna-fish skinning performed on the raw product according to the present invention allows to carry out said operation mechanically, whereby it produces a significant reduction of labour, in addition to giving the advantage of making the subsequent cleaning steps easier. Another advantage of the process according to the present invention is the fact that the product salting is performed on the raw product, thus avoiding the operation of adding prickle or dry salt on the already canned product. A further advantage of the process according to the present invention is given by the fact that the fish reaches the cooking step with a higher water content and a softer consistency, whereby it is possible to reduce the cooking time with subsequent energy savings.

These and other advantages of the process according to the present invention will be apparent to those skilled in the art from the following operative examples.

### EXAMPLE 1

100 Kg of frozen tuna-fish of the Yellowfin species were unfrozen in running water, thus obtaining 98 kg of product which were then subjected to the cutting operation. This operation was carried out according to the conventional technique, thus obtaining 96.4 kg of fillets having a length of 30-40 cm and a weight between 5 and 7 kg. The thus obtained pieces, after evisceration, were subjected to automatic skinning and subsequent boning. 70.4 kg of cleaned product were obtained, which were subjected to salting by injecting therein a 10% acqueous solution of NaCl. 14 liters of said solution at a temperature of 4-5°C were injected into the product by means of multi-needles machines. 84.4 kg of salted product were thus obtained, which were introduced into a barrel-type churn with internal shapes manufactured by the Fava Giorgio Axel s.r.l. company of Parma. The mechanical shaking of the product was carried on for 25 minutes out of a total stay time of about 20 hours at the temperature of 4-5°C. 82.4 kg of product were unloaded from the churn, which were subjected to steaming (conventional technique, flowing steam) thus obtaining 60.4 kg of cooked tuna-fish, cooled, dried and subjected to the usual finishing operations, finally obtaining 51.2 kg of product to be canned, with a yield of 51.2%.

### EXAMPLE 2

100 Kg of frozen tuna-fish of the Yellowfin species were unfrozen in running water, thus obtaining 98 kg of product which were then subjected to the cutting operation. This operation was carried out according to the conventional technique, thus obtaining 96.5 kg of fillets having a length of 30-40 cm and a weight between 5 and 9 kg. The thus obtained pieces, after evisceration, were subjected to automatic skinning and subsequent boning. 70.8 kg of cleaned product were obtained, which were subjected to salting by injecting therein a 10% acqueous solution of NaCl. 14.2 liters of said solution at a temperature of 4-5°C were injected into the product by means of multi-needles machines. 85 kg of salted product were thus obtained, which were introduced into a barrel-type churn with internal shapes manufactured by the Fava Giorgio Axel s.r.l. company of Parma. The mechanical shaking of the product was carried on for 25 minutes out of a total stay time of about 20 hours at the temperature of 4-5°C. 83 kg of product were unloaded from the churn, which were subjected to steaming (conventional technique, flowing steam) thus obtaining 61.2 kg of cooked tuna-fish, cooled, dried and subjected to the usual finishing operations, finally obtaining 52.0 kg of product to be canned, with a yield of 52.0%.

### EXAMPLE 3

100 Kg of frozen tuna-fish of the Yellowfin species were unfrozen in running water, thus obtaining 98 kg of product which were then subjected to the cutting operation. This operation was carried out according to the conventional technique, thus obtaining 96.5 kg of fillets having a length of 30-40 cm and a weight between 5 and 9 kg. The thus obtained pieces, after evisceration, were subjected to automatic skinning and subsequent boning. 70.6 kg of cleaned product were obtained, which were subjected to salting by injecting therein a 10% acqueous solution of NaCl. 14 liters of said solution at a temperature of 4-5°C were injected into the product by means of multi-needles machines. 84.6 kg of salted product were thus obtained, which were introduced into a barrel-type churn with internal shapes manufactured by the Fava Giorgio Axel s.r.l. company of Parma. The mechanical shaking of the product was carried on for 25 minutes out of a total stay time of about 20 hours at the temperature of 4-5°C. 82.6 kg of product were unloaded from the churn, which were subjected to steaming (conventional technique, flowing steam) thus obtaining 61.0 kg of cooked tuna-fish, cooled, dried and subjected to the usual finishing operations, finally obtaining 51.8 kg of product to be canned, with a yield of 51.8%.

### COMPARATIVE EXAMPLE

Starting with 100 kg of tuna-fish as described above and operating according to the prior art, the unfrozen tuna-fish is subjected to cutting, steaming, hand skinning, evisceration and boning thus obtaining 41 kg of product, which were subjected to salting by adding 0.8 kg of ground sodium chloride.

Finally, 41.8 kg of packed product were obtained with a yield of 41.8%, definitely lower than the 51-52% yield obtained according to the process of the present invention.

As explained in the above-described examples, the final step of the process according to the invention is the mechanical shaking of the tuna-fish. The main objects of this shaking are to favour the absorption of the injected saline solution, to tenderize the product, to improve the sticking of the different myotomes and to increase the yield, as it will be made clear hereafter.

The absorption of the saline solution is improved because the mechanical shaking of the product allows a faster penetration of the solution and a more even distribution thereof within the different muscular portions of the tuna-fish. The yield is favourably affected by the mechanical treatment which, by acting as a flesh tenderizer, favours a quicker and more effective cooking and ripening of the finished product.

The most apparent effect of said mechanical shaking is the extraction of the saline-soluble proteins, which can be detected from the formation of surface slime, which act as an adhesive with respect to the various myotomes. An insufficient extraction of the proteins would imply a greater loss thereof during the cooking step, and this would be detrimental for the product quality both from the nutritional and aesthetical standpoint.

The above-mentioned mechanical treatment can be carried out in any mechanical shaker suitable for this purpose. For example, it can be performed in a churn of the type used in the discontinuous production of butter. The tuna-fish is kept in the churn for about 20 hours with intermittent shaking at a temperature preferably below 10°C. Even if higher temperatures would foster a quicker diffusion of the saline solution, it is advisable to stay below the limit of 10°C in order to prevent risks of fermentation of the product. The other operating parameters for performing this processing step are selected also according to the type of shaker employed. In fact, there are shakers wherein the pieces of product are scraped one against the other or on the metallic surface of the shaker, and other types of shakers wherein the pieces of product are hurled one against the other by the movement of blades rotating within the shaker. The choice of the type of shaker and of the other operating conditions are within the reach of a person skilled in the art, whereby they do not require further description. It is important that said mechanical treatment carries out a sort of controlled gelling of the tissues on the product, without resulting in a loss of raw material but in such a way as to obtain the desired structure of the finished product.

## Claims

1. A process for processing tuna-fish prior to its canning, wherein the unfrozen and cut product is subjected to the skinning, boning and cleaning operations, characterized in that said operations are carried out on the raw product, whereafter the product is salted by injecting therein a saline solution and finally subjected to a strong mechanical shaking.

2. A process according to claim 1, characterized in that the strong mechanical shaking of the raw product is carried out in a churn.

3. A process according to claim 1 or 2, characterized in that the saline solution is injected by means of multi-needles machines.
